# EUROPEAN PATENT APPLICATION

(11) **EP 4 618 436 A1**
(43) Date of publication of application: **17.09.2025**
(21) Application number: 24163904.6
(22) Date of filing: 15.03.2024
(51) Int. Cl.: H04B 7/06, H04L 1/00, H04L 25/02

(54) **MOBILITY AWARE REPORTING OF CSI REPORTING QUANTITY**

(71) Applicant: Nokia Technologies Oy, 02610 Espoo (FI)
(72) Inventor: Suarez Rivera, Luis Alberto, 81245 Munich (DE); Zirwas, Wolfgang, 81249 Munich (DE); Kovalchukov, Roman, 33720 Tampere (FI); Vilas Boas, Brenda, 85579 Neubiberg (DE); Visotsky, Eugene, Illinois, 60089 (US)
(74) Representative: TBK

(57) **Abstract**

Apparatus comprising
means for preparing, by a terminal for each of one or more future reporting points in time, a respective estimation of a value of a channel state information reporting quantity based on a plurality of values of the channel state information reporting quantity for earlier points in time;
means for reporting, to a base station, a value of the channel state information reporting quantity at a current point in time and, for each of the one or more future reporting points in time, the respective estimation of the value of the channel state information reporting quantity, wherein
the plurality of values of the channel state information reporting quantity for the earlier points of time and the value of the channel state information reporting quantity at the current point of time are determined based on measurements of a reference signal received by the terminal from the base station.

## Description

### Technical Field

The present disclosure relates to CSI reporting.

### Abbreviations

- 3GPP: 3^{rd} Generation Partnership Project
- 4G/5G/6G: 4^{th}/5^{th}/6^{th} Generation
- Al: Artificial Intelligence
- AP: Aperiodic
- BS: Base Station
- CBSR: Codebook Subset Restriction
- CDF: Cumulative Distribution Function
- CJT: Cooperative Joint Transmission
- CQI: Channel Quality Indicator
- CS: Cosine Similarity
- CSI: Channel State Information
- DFT: Discrete Fourier Transform
- DL: Downlink
- EVD: Eigenvalue Decomposition
- gNB: gNodeB
- L1-SINR: Layer 1 Signal-to-Interference-and-Noise-Ratio
- LOS: Line of Sight
- MCS: Modulation and Coding Scheme
- ML: Machine Learning
- MU-MIMO: Multiuser Multiple Input/Multiple Output
- NLOS: Non Line of Sight
- NMSE: Normalized Mean Squared Error
- P: Periodic
- PDP: Power Delay Profile
- PDSCH: Physical Downlink Shared Channel
- PMI: Precoding Matrix Indicator
- PRB: Physical Resource Block
- RAN: Random Access Network
- RE: Resource Elements
- RI: Rank Indicator
- RS: Reference Signal
- SCS: Sharpened Cosine Similarity
- SGCS: Squared Generalized Cosine Similarity
- SP: Semi-persistent
- SRS: Sounding Reference Signal
- SU-MIMO: Single User Multiple Input/Multiple Output
- SVD: Singular Value Decomposition
- TDCP: Time Domain Channel Properties
- TRP: Transmission/Reception Point
- TRS: Tracking Reference Signals
- UE: User Equipment
- UL: Uplink
- ZOH: Zero Order Hold

### Background

CSI provides information of a channel between UE and gNB. The UE measures one or more reference signals transmitted by the base station (gNB), calculates the CSI based on the measurement(s), and reports the CSI back to the base station. CSI reporting quantities comprise, for example, Precoding Matrix Indicators (PMI), Channel Quality Indicators (CQI) and Rank Indicators (RI). The Precoding Matrix Indicator (PMI) allows the UE to report its preferred precoding for downlink transmissions on the PDSCH. By CQI, the UE indicates to the base station the current radio conditions in the form of signal-to-ratio (SNR) and the base station is able to determine based on that information, the Modulation and Coding Scheme (MCS) for the transmission toward the UE. The rank indicates the number of independent utilizable streams, thanks to multipath conditions, seen by UE in DL, which corresponds to the maximum number of layers that the gNB may use for transmission to the UE in MIMO. The base station uses the CSI report to adapt its transmission to the UE accordingly.

### Summary

### It is an object to improve the prior art.

According to a first aspect, there is provided an apparatus comprising
means for preparing, by a terminal for each of one or more future reporting points in time, a respective estimation of a value of a channel state information reporting quantity based on a plurality of values of the channel state information reporting quantity for earlier points in time;
means for reporting, to a base station, a value of the channel state information reporting quantity at a current point in time and, for each of the one or more future reporting points in time, the respective estimation of the value of the channel state information reporting quantity, wherein
the plurality of values of the channel state information reporting quantity for the earlier points of time and the value of the channel state information reporting quantity at the current point of time are determined based on measurements of a reference signal received by the terminal from the base station.

The apparatus may further comprise
means for checking, for at least one of plural predefined functions, whether a trend of the value of the channel state information reporting quantity at the current point in time and the estimations of the value of the channel state information reporting quantity for the one or more future reporting points in time deviates from the respective one of the plural predefined functions by less than a predefined threshold; wherein
the means for reporting may be configured to report the estimations by reporting a first one of the plural predefined functions in response to checking that the trend deviates from the first one of the plural predefined functions by less than the predefined threshold.

The apparatus may further comprise
means for determining for which function of plural predefined functions a trend of the value of the channel state information reporting quantity at the current point in time and the estimations of the value of the channel state information reporting quantity for the one or more future reporting points in time deviates least from the respective one of the plural predefined functions; wherein
the means for reporting may be configured to report the estimations by reporting a first one of the plural predefined functions in response to determining that the trend deviates least from the first one of the plural predefined functions.

The plural predefined functions may be defined in a first codebook, and the means for reporting may be configured to report the estimations by reporting a number of an entry in the first codebook corresponding to the first one of the plural predefined functions.

The apparatus may further comprise at least one of
means for receiving the first codebook from the base station; or
means for storing a plurality of codebooks including the first codebook and means for receiving an indication from the base station that the first codebook is to be used.

The means for preparing may be configured to prepare the estimation for a single future reporting point in time;
the estimation may indicate a range of values the channel state information reporting quantity may have between the current point in time and the single future reporting point in time.

The range may have a maximum value and a minimum value;
the value of the channel state information reporting quantity at the current point in time may be one of the maximum value of the range and the minimum value of the range; and
the means for reporting may be configured to report the other one of the maximum value of the range and the minimum value of the range.

According to a second aspect, there is provided an apparatus, comprising
means for receiving, by a base station from a terminal, a value of a channel state information reporting quantity at a current point in time and, for each of one or more future reporting points in time, a respective estimation of a value of the channel state information reporting quantity;
means for estimating a quality of a channel from the base station to the terminal at a first future point in time using the value of the channel state information reporting quantity at the current point in time and at least one of the estimations of the value of the channel state information reporting quantity for the future reporting points in time;
means for preparing a transmission from the base station to the terminal at the first future point in time using the estimated quality of the channel from the base station to the terminal at the first future point in time, wherein
the value of the channel state information reporting quantity at the current point in time is based on a reference signal latest transmitted by the base station to the terminal.

The means for receiving may be configured to receive an indication of a first function defining a trend of the value of the channel state information reporting quantity at the current point in time and the estimations of the value of the channel state information reporting quantity for the plural future reporting points in time; and the apparatus may further comprise
means for calculating, for the first future point in time, the estimation of the value of the channel state information reporting quantity based on the first function.

The apparatus may further compriseg
means for storing a first codebook comprising plural entries; wherein
each of the entries of the first codebook comprises a respective function;
one of the entries of the first codebook comprises the first function;
the means for receiving may be configured to receive a number of the entry comprising the first function; and the apparatus may further comprise
means for extracting the first function from the first codebook based on the received number of the entry.

The means for storing may be configured to store plural codebooks including the first codebook; and the apparatus may comprise
means for selecting the first codebook among the plural codebooks;
means for providing, to the terminal, an indication that the first codebook is to be used.

The means for selecting may be configured to select the first codebook based on a statistics obtained from one or more terminals.

The means for receiving may be configured to receive the estimation for a single future reporting point in time;
the estimation may indicate a range of values the channel state information reporting quantity may have between the current point in time and the single future reporting point in time;
the range may have a maximum value and a minimum value.

The value of the channel state information reporting quantity at the current point in time may be one of the maximum value of the range and the minimum value of the range; and
the means for receiving may be configured to receive the other one of the maximum value of the range and the minimum value of the range.

The apparatus may further comprise
means for receiving, by the base station, at least one of a measurement value related to a second reference signal or a third reference signal;
means for estimating the quality of the channel at a second future point in time between the current point in time and the single future reporting point in time using a second function and the at least one of the measurement value related to the second reference signal and/or the third reference signal; wherein
the second function may span the range of values of the channel state information reporting quantity between the current point in time and the single future reporting point in time;
a value of the second function at the current point in time may be the value of the channel state information reporting quantity at the current point in time;
the second reference signal may be transmitted by the base station and received by the terminal;
the third reference signal may be transmitted by the terminal; and
the first reference signal may be different from the second reference signal.

The second function may be a monotonic function.

The means for preparing may be configured to estimate the quality of the channel from the base station to the terminal at the first future point in time using at least the estimation of the value of the channel state information reporting quantity for the future reporting point in time immediately following the first point in time and,
if at least one of the future reporting points in time precedes the first future point in time: the estimation of the value of the channel state information reporting quantity for the future reporting point in time immediately preceding the first future point in time;.
if none of the future reporting points in time precedes the first future point in time: the value of the channel state information reporting quantity at the current point in time.

The means for preparing may be configured to set at least one of a modulation and coding scheme and a rank for the transmission to the terminal at the first future point in time based on the estimated quality of the channel from the base station to the terminal at the first future point in time.

The apparatus may further comprise
means for deciding whether the estimated quality of the channel at a second future point in time is poorer than a threshold;
means for inhibiting the base station to perform the transmission to the terminal at the second future point in time in response to deciding that the estimated quality of the channel at the second future point in time is poorer than the threshold.

According to a third aspect, there is provided a method comprising
preparing, by a terminal for each of one or more future reporting points in time, a respective estimation of a value of a channel state information reporting quantity based on a plurality of values of the channel state information reporting quantity for earlier points in time;
reporting, to a base station, a value of the channel state information reporting quantity at a current point in time and, for each of the one or more future reporting points in time, the respective estimation of the value of the channel state information reporting quantity, wherein
the plurality of values of the channel state information reporting quantity for the earlier points of time and the value of the channel state information reporting quantity at the current point of time are determined based on measurements of a reference signal received by the terminal from the base station.

The method may further comprise
checking, for at least one of plural predefined functions, whether a trend of the value of the channel state information reporting quantity at the current point in time and the estimations of the value of the channel state information reporting quantity for the one or more future reporting points in time deviates from the respective one of the plural predefined functions by less than a predefined threshold; wherein
the estimations may be reported by reporting a first one of the plural predefined functions in response to checking that the trend deviates from the first one of the plural predefined functions by less than the predefined threshold.

The method may further comprise
determining for which function of plural predefined functions a trend of the value of the channel state information reporting quantity at the current point in time and the estimations of the value of the channel state information reporting quantity for the one or more future reporting points in time deviates least from the respective one of the plural predefined functions; wherein
the estimations may be reported by reporting a first one of the plural predefined functions in response to determining that the trend deviates least from the first one of the plural predefined functions.

The plural predefined functions may be defined in a first codebook, and the estimations may be reported by reporting a number of an entry in the first codebook corresponding to the first one of the plural predefined functions.

The method may further comprise at least one of
receiving the first codebook from the base station; or
storing a plurality of codebooks including the first codebook and receiving an indication from the base station that the first codebook is to be used.

The estimation may be prepared for a single future reporting point in time;
the estimation may indicate a range of values the channel state information reporting quantity may have between the current point in time and the single future reporting point in time.

The range may have a maximum value and a minimum value;
the value of the channel state information reporting quantity at the current point in time may be one of the maximum value of the range and the minimum value of the range; and
the other one of the maximum value of the range and the minimum value of the range may be reported.

According to a fourth aspect, there is provided a method, comprising
receiving, by a base station from a terminal, a value of a channel state information reporting quantity at a current point in time and, for each of one or more future reporting points in time, a respective estimation of a value of the channel state information reporting quantity;
estimating a quality of a channel from the base station to the terminal at a first future point in time using the value of the channel state information reporting quantity at the current point in time and at least one of the estimations of the value of the channel state information reporting quantity for the future reporting points in time;
preparing a transmission from the base station to the terminal at the first future point in time using the estimated quality of the channel from the base station to the terminal at the first future point in time, wherein
the value of the channel state information reporting quantity at the current point in time is based on a reference signal latest transmitted by the base station to the terminal.

The method may further comprise
receiving an indication of a first function defining a trend of the value of the channel state information reporting quantity at the current point in time and the estimations of the value of the channel state information reporting quantity for the plural future reporting points in time; and
calculating, for the first future point in time, the estimation of the value of the channel state information reporting quantity based on the first function.

The method may further comprise
storing a first codebook comprising plural entries; wherein
each of the entries of the first codebook comprises a respective function;
one of the entries of the first codebook comprises the first function; and the method may further comprise
receiving a number of the entry comprising the first function; and
extracting the first function from the first codebook based on the received number of the entry.

Plural codebooks including the first codebook may be stored; and the method may comprise
selecting the first codebook among the plural codebooks;
providing, to the terminal, an indication that the first codebook is to be used.

The first codebook may be selected based on a statistics obtained from one or more terminals.

The estimation for a single future reporting point in time may be received;
the estimation may indicate a range of values the channel state information reporting quantity may have between the current point in time and the single future reporting point in time;
the range may have a maximum value and a minimum value.

The value of the channel state information reporting quantity at the current point in time may be one of the maximum value of the range and the minimum value of the range; and
the other one of the maximum value of the range and the minimum value of the range may be received.

The method may further comprise
receiving, by the base station, at least one of a measurement value related to a second reference signal or a third reference signal;
estimating the quality of the channel at a second future point in time between the current point in time and the single future reporting point in time using a second function and the at least one of the measurement value related to the second reference signal and/or the third reference signal; wherein
the second function may span the range of values of the channel state information reporting quantity between the current point in time and the single future reporting point in time;
a value of the second function at the current point in time may be the value of the channel state information reporting quantity at the current point in time;
the second reference signal may be transmitted by the base station and received by the terminal;
the third reference signal may be transmitted by the terminal; and
the first reference signal may be different from the second reference signal.

The second function may be a monotonic function.

The preparing the transmission may comprise estimating the quality of the channel from the base station to the terminal at the first future point in time using at least the estimation of the value of the channel state information reporting quantity for the future reporting point in time immediately following the first point in time and,
if at least one of the future reporting points in time precedes the first future point in time: the estimation of the value of the channel state information reporting quantity for the future reporting point in time immediately preceding the first future point in time;.
if none of the future reporting points in time precedes the first future point in time: the value of the channel state information reporting quantity at the current point in time.

The preparing the transmission may comprise setting at least one of a modulation and coding scheme and a rank for the transmission to the terminal at the first future point in time based on the estimated quality of the channel from the base station to the terminal at the first future point in time.

The method may further comprise
deciding whether the estimated quality of the channel at a second future point in time is poorer than a threshold;
inhibiting the base station to perform the transmission to the terminal at the second future point in time in response to deciding that the estimated quality of the channel at the second future point in time is poorer than the threshold.

Each of the methods according to the third and fourth aspects may be a method of CSI reporting.

According to each of the first to fourth aspects, the channel state information reporting quantity may comprise at least one of a channel quality indicator of a channel from the base station to the terminal, a maximum rank for a transmission from the base station to the terminal, or an intermediate key performance indicator for the channel comparing a measurement or estimation of the channel with a reference channel measurement or estimation, such as a squared generalized cosine similarity or a sharpened cosine similarity or a cosine similarity.

According to a fifth aspect, there is provided a computer program product comprising a set of instructions which, when executed on an apparatus, is configured to cause the apparatus to carry out the method according to any of the third or fourth aspects. The computer program product may be embodied as a computer-readable medium or directly loadable into a computer.

According to some example embodiments, at least one of the following advantages may be achieved:
- Channel knowledge capabilities at gNB are improved, in particular for high mobility UEs
- Low or moderate signaling effort
- Backwards compatibility with current CSI mechanisms.

### Brief description of the drawings

Further details, features, objects, and advantages are apparent from the following detailed description of the preferred example embodiments which is to be taken in conjunction with the appended drawings, wherein:
Fig. 1 illustrates CSI aging for different rank layers;
Fig. 2 Illustrates a CSI feedback process for CSI prediction and compression in the framework of Rel. 18;
Fig. 3 illustrates Time Correlation Calculation for TDCP;
Fig. 4 illustrates CDF of the squared generalized cosine similarity (SGCS) for a deployment of UEs and for different prediction times with ZOH, (a) without noise and (b) with noise.
Fig. 5 illustrates SGCS for arbitrary UEs and channel realizations for different prediction times, (a) without noise and (b) with noise.
Fig. 6 illustrates a simulation example of the CSI degradation for an arbitrary UE equipped with 4 Rx antennas at 10 km/h and CSI-RS and CSI reporting period 20 ms.
Fig. 7 illustrates some trends of CQI and respective codewords as an example of a CQI codebook according to some example embodiments;
Fig. 8 is a message sequence diagram for codebook configuration according to some example embodiments;
Fig. 9 illustrates applicable time periods for different rank values and the respective estimated (or predicted) average spectral efficiency over time according to some example embodiments;
Fig. 10 illustrates different prediction functions for predicting CQI which may be used in a single time segment (CSI update period) according to some example embodiments;
Fig. 11 illustrates the utilization of maximum and minimum rank values according to some example embodiments;
Fig. 12 shows an apparatus according to an example embodiment;
Fig. 13 shows a method according to an example embodiment;
Fig. 14 shows an apparatus according to an example embodiment;
Fig. 15 shows a method according to an example embodiment; and
Fig. 16 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

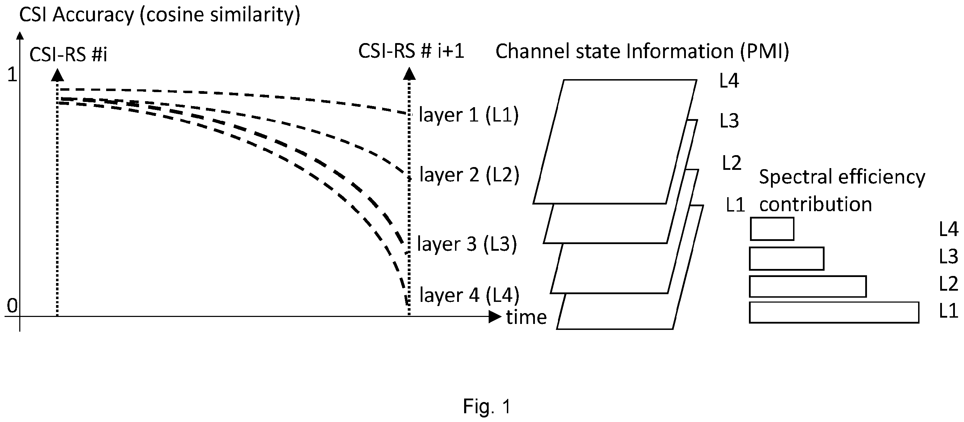

CSI aging due to changing channel conditions is an issue for high mobility in MIMO. CSI prediction (as e.g. according to Rel. 18) is not reliable at 100%, and it might introduce errors in the reported CSI reporting quantities, namely Precoding Matrix Indicators (PMI), Channel Quality Indicator (CQI) and Rank Indicators (RI). Fig. 1 shows, on the left side, CSI accuracy in function of the time. For a relatively low speed the first MIMO streams, with rank 1 or 2, the CSI aging is relative low with respect to the ideal and instantaneous channel. However, for higher ranks the degradations (i.e. CSI aging) go much more faster. Therefore, the reported Rl is mismatched with the reality of the CSI degradation in high mobility conditions. On the right side of Fig. 1, the spectral efficiency contribution is indicated for each of the layers. As may be seen, the spectral efficiency contribution decreases for higher layers. An optimization of the reported CSI with respect to the attainable spectral efficiency is made to avoid using unnecessarily resources for the CSI reporting feedback.

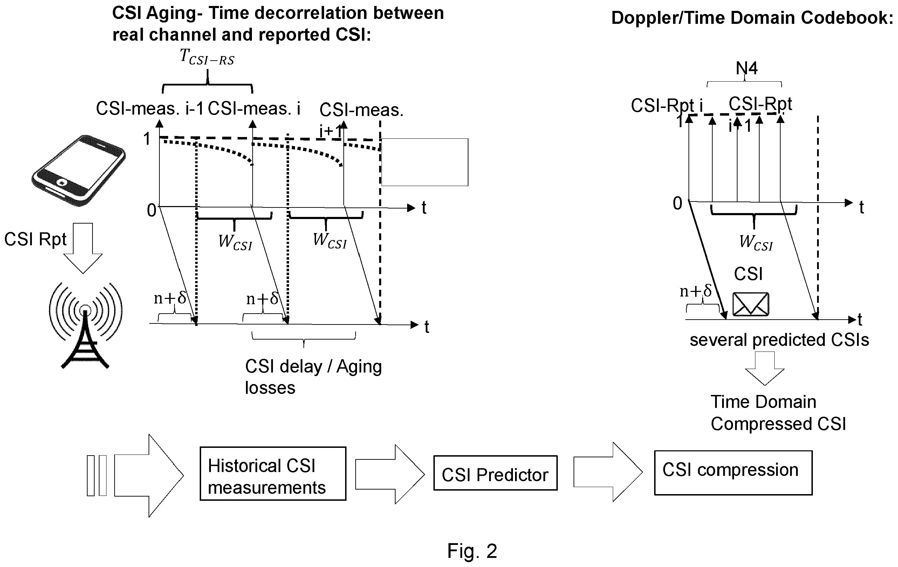

Another issue is the delay δ and the time in between CSI updates *W_{CSI}* in the CSI reporting because the CSI report received and used at the base station may be outdated, in particular when the UE moves at high speed. Fig. 2 depicts a full process of CSI feedback including channel prediction and the CSI compression. As may be seen from Fig. 2, top left, the UE measures the channel quality at certain points in time. However, the channel changes during the two CSI updates. Therefore, in Rel. 18, some predictions are made for compensation. These predictions are based on historical CSI measurements (see bottom of Fig. 2). Also, as shown on top right of Fig. 2, the UE may report CSI only every N4 CSI predictions (N4≥1), called CSI compression.

For carrying out the channel prediction, the UE stores historical channel measurements. A typical CSI predictor, e.g. Wiener Filter implementation, requires these historical measurements to calculate the prediction filter coefficients required, and later on, to predict future channel states based on latest channel measurements by applying such filter coefficients. After the channel states have been predicted, the corresponding precoding matrices can be obtained for the different predicted points. In total N4 space-frequency eigenvector-based precoding matrix sets obtained from channel prediction are required in this case. These precoding matrices sets are compressed in space and frequency by obtaining the respective beam - delay representation. In the example of Fig. 2, N4 precoding matrix indicators (PMI) are compressed into, for example, a number of Doppler components as it is the case for 3GPP Rel. 18.

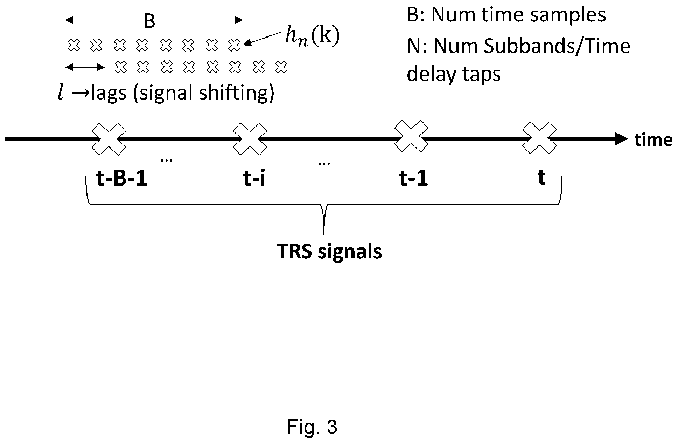

Time Domain Channel Properties (TDCP) indicator is another CSI quantity. It provides the BS radio physical interface information regarding the relative mobility of the UE and associated Doppler characteristics of the link with the serving BS. This indicator is useful for specific reconfiguration use cases, like CSI codebook type switching and reference signal reconfiguration (e.g., SRS). An illustration of the process is provided in Fig. 3.

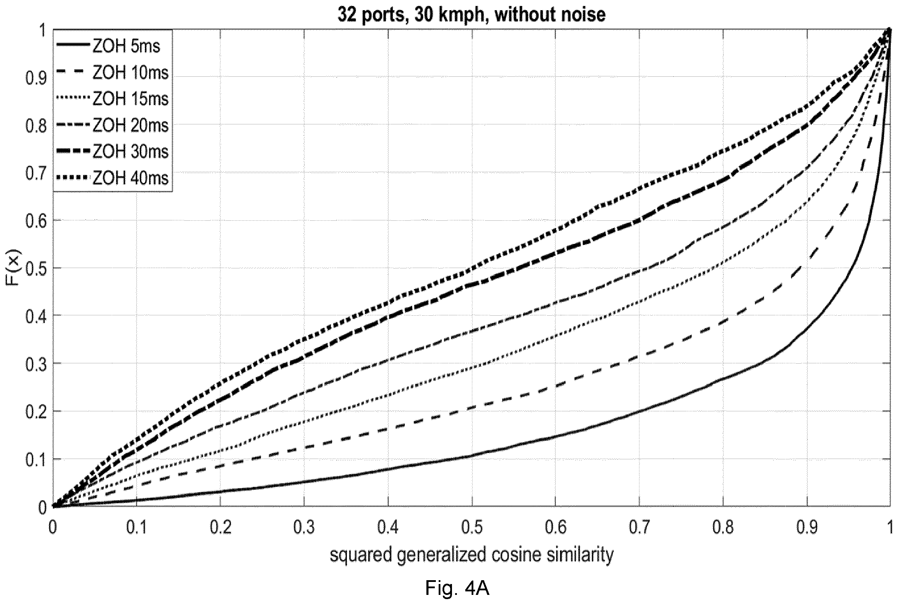

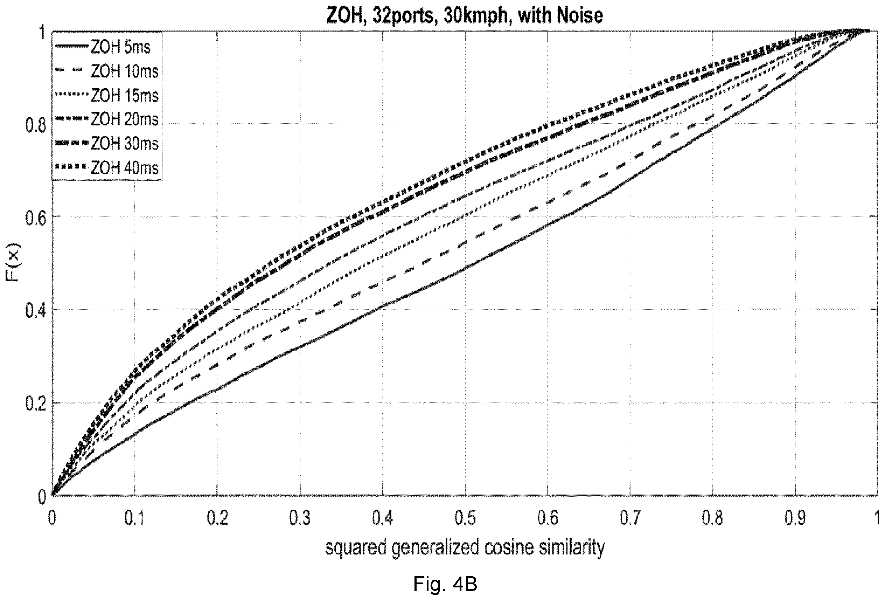

For the CSI prediction use case, the prediction quality depends on the used predictor as well as the prediction time horizon. Generally, the prediction accuracy will degrade over increasing prediction time length. This is illustrated in Fig. 4, where the CDF of the squared generalized cosine similarity (SGCS) degrades with increasing prediction time. In the figure, a Zero-order hold filter is used in which the last calculated measurement is reused for further time points ahead. Fig. 4A illustrates the CDF for a number of deployed UEs with a ZoH filter in a situation without noise for different prediction horizons. With increasing prediction horizon the SGCS is gradually worsened due to the increased inaccuracy of the outdated channel measurement with respect to the instantaneous channel conditions. This situation is further aggravated with noise as illustrated in the Fig. 4B.

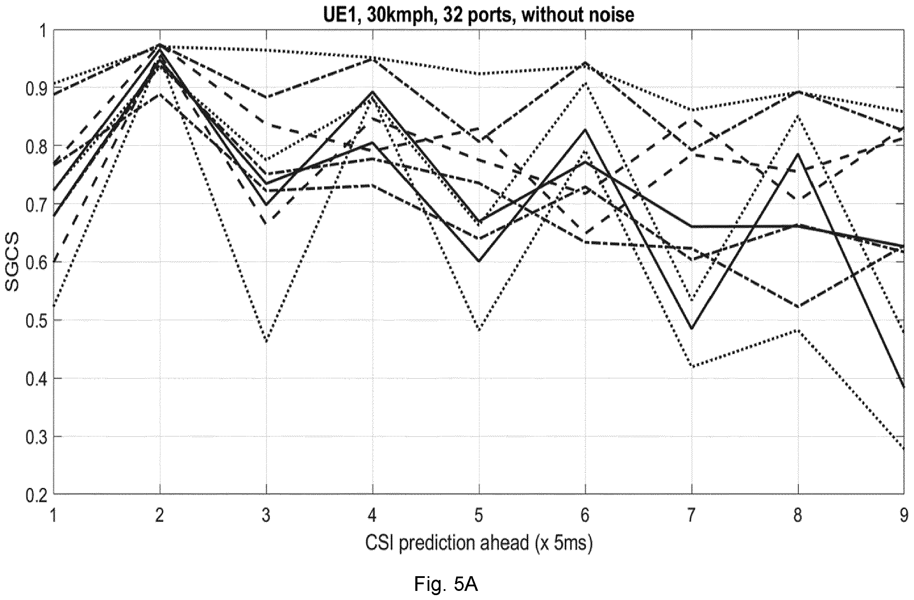

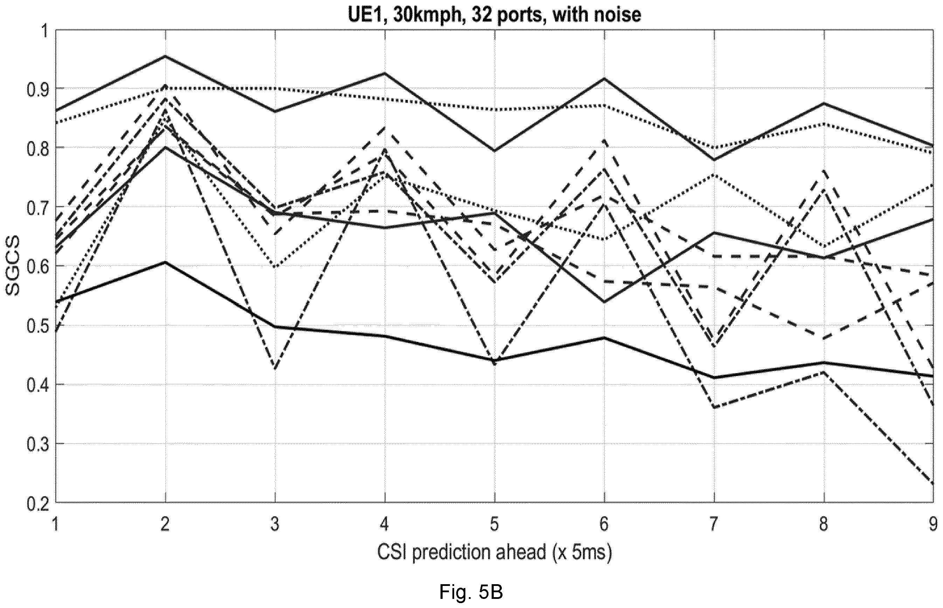

Fig. 5 shows the SGCS based on a ZOH estimation with respect to the CSI prediction time ahead, re-using the same CSI measurement (Fig. 5A without noise, Fig. 5B with noise). There are different patterns of correlation with respect to future channel conditions. These patterns might be nearly constant or may have a slope or may even show a cyclic behavior. This cyclic behavior of the CSI between two time points may be explained by the fact that for a moving UE each multipath component comprising the radio channel repeats its values after the UE has moved by one wavelength. Therefore, it happens that the relative phase constellation of the relevant multipath components might be the same after a certain UE moving distance, which leads to the cyclical behavior. Note that for the used cost function, i.e., the SGCS, only the relative phases between the relevant multipath components have to be aligned. In contrast, for the normalized mean squared error (NMSE), the absolute phase values of the channel transfer function are relevant, too. Note that ZOH is just the simplest channel predictor, while for UE sided channel prediction much more complex predictors might be used with different reliability.

A first technical problem solved by some example embodiments is to adapt the CQI reporting efficiently to the different time behavior with potentially largely varying channel condition behaviors (see Fig. 5, for example). Only the UE may know the channel prediction accuracy by comparing the prediction (estimation) with real measurements. On the other hand, the gNB needs a reliable prediction (estimation) of the instantaneous channel conditions for the transmissions to the UE. Therefore, some example embodiments assist the traditional CQI reporting by describing the behavioral changes in long term periods. Based on the prediction accuracy of the UE, a mechanism for long term CQI reporting, reliability information and/or correction may be carried out.

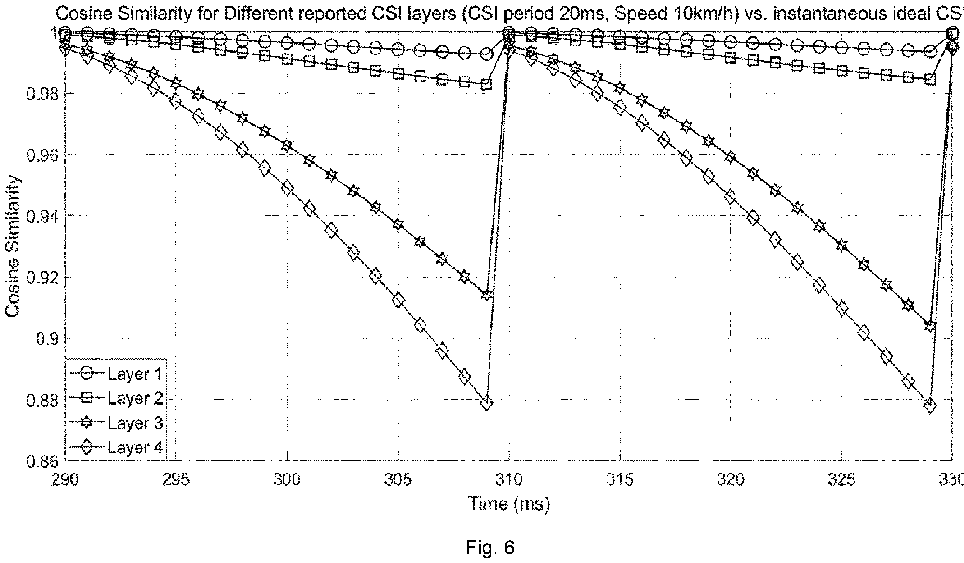

The second problem is how to define an appropriate rank value in future times ahead away from the last CSI update. Fig. 6 illustrates the CSI degradation for an arbitrary UE at 10km/h and CSI-RS and CSI reporting periodicity equal both to 20ms. This degradation is represented by the cosine similarity with respect to the instantaneous channel for different streams from Rank 1 to Rank 4. From Fig. 6, it is seen that, if he gNB assumes a good accuracy of the initially reported RI, this assumption might bring serious performance problems at the network side, in particular, for high UE speeds. For that reason, some example embodiments provide a modified rank estimation and reporting, which is helpful in particular (but not only) for high mobility cases.

Some example embodiments provide a mechanism of RI/CQI calculation and reporting which
1) does not depend on 100% from the instantaneous or predicted PMls in the latest CSI calculation
2) is able to report historical trends or useful CQI or RI statistics in long term periods to have a more reliable output.

Some example embodiments provide a long term trend that CQI or RI might present for long periods of time when the CSI-RS is measured sufficiently often between two subsequent CSI reports. In addition, some example embodiments provide a mechanism related to a special case where CSI-RS measurements and CSI reporting have the same periodicity (so no information of CSI-RS is available in between updates). This mechanism might be assisted for example with the reported TDCP or other external sources of information like other reference signals different from CSI-RS. Some example embodiments are particularly (but not only) useful for high mobility UEs.

Some example provide a mechanism to report on a trend of a CSI reporting quantity (e.g. CQI and/or RI values), reliability information or correction patterns for long term periods with respect to a freshly calculated CQI/RI. The long term periods are associated to one or more CSI-RS occasions ahead in time. Such a trend may be represented by one or more segments. Mathematical functions may be used to describe the trend. In some example embodiments, different types of trends may be represented by different codebook entries, where a codebook comprises a respective entry for each predefined type of trend. The reporting, reliability or correction patterns associated to the codebook outputs might be calculated with different kind of CSI predictors including ZoH. The trends do not necessarily express an estimated CQI linked to a PMI, but may suggest for different prediction times a respective correction due to the long term statistics.

The CQI/RI trend reports (e.g. codebook based reports) may not replace the legacy CQI/RI reporting, but rather provide additional statistics to the network regarding reliability or correction information for channel estimation. In some example embodiments, the trend reports may be transmitted less often than the regular PMI/CQI/RI report, because the trends are based on long term statistics.

Basically, the operation of a network entity (base station or TRP) according to some example embodiments may be described as follows:
- -transmits a CSI configuration for a CQI/RI behavioral trend reporting scheme based on previously received channel conditions from the UE.
- transmits a set of channel state information reference signals (CSI-RS) in one or more time occasions,
- receives one or more CSI reports including one or more CQI/RI behavioral trend responses for one or more time segments ahead in each of the CSI reports.
- determines and transmits a new configuration for the CQI/RI behavioral trend responses if necessary, based on the one or more CSI reports and at least on the one or more CQI/RI behavioral trend responses.

Basically, the operation of a terminal (UE) according to some example embodiments may be described as follows:
- receives a CSI configuration for a CQI/RI behavioral trend reporting scheme based on previously reported channel conditions.
- receives a set of channel State information reference signals (CSI-RS) in one or more time occasions,
- transmits one or more CSI reports including one or more CQI/RI behavioral trend responses for one or more time segments ahead in each of the CSI reports.
- receives a new configuration for the CQI/RI behavioral trend scheme, if necessary, based on the one or more CSI reports and at least on the one or more CQI/RI behavioral trend responses received at the BS/Network side.

If the CSI-RS periodicity is denser than the time window between two CSI updates (i.e.: the CSI reporting period), a following mechanism based on a trend may be used according to some example embodiments:
An enhanced CQI reporting scheme may be employed, especially in combination with channel prediction, including the ZOH case. The enhanced CQI reporting scheme includes a long term reliability pattern or correction statistics for the CQI in the future. The long term reliability pattern or correction statistics is a trend based on previous CSI-RS measurements over a long time (e.g. several 10 ms up to some few seconds). The trend may be provided in the form of a set of one or more functions.

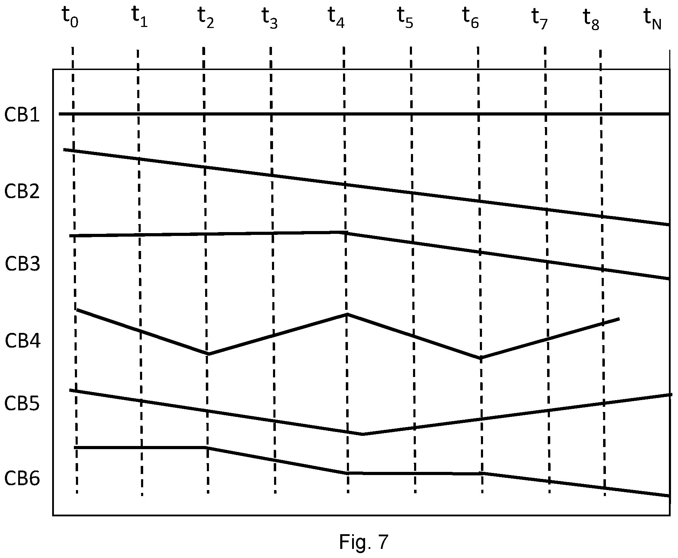

A codebook (CQI codebook) may comprise different entries for different predefined types of trends. Some of the types of trends are illustrated in the example of 7. The CQI codebook of Fig. 7 contains different codebook entries CB1 to CB6, and for each codeword the CQI correction and/or reliability coefficient values for the time instances *t₀* to *t_{N}* follow a different trend. For example, the trend of CB1 is more or less flat, while the trend of CB4 cycles between two different min and max values. The different time instances correspond to different CSI-RS measurement occasions embedded into a long reporting window.

To determine the trend, the UE is observing the channel evolution over some time to identify the CQI behavior (trend). Note that a trend is often observed over quite long UE trajectories as it is mainly defined by the large scale parameters of the radio channel. In case a CQI codebook is defined, the UE selects a CQI codeword fitting best to trend. For the selection, the UE may use ZOH or a higher complexity order prediction methods. The UE may then report a first fresh CQI value without prediction as a reference value, similarly as in legacy standard. In addition, the UE may report the best fitting codebook entry CBx, such as the ones presented in Fig 7. The CQI long-term function (trend) may be represented by mathematical functions. Different mathematical functions may be applied to the different time segments, e.g. linear, higher polynomial, exponential, logarithmic or any periodical function (e.g. triangular, sinusoidal). Each of the codebook entries may have additional specific parametrization depending on the function shapes. For instance, a simple implementation might be carried by the concatenation of one or more straight line segments as in the examples of Fig. 7.

If a CQI codebook is not defined, the UE may directly report the trend (e.g. by means of one or more mathematical functions) to the base station.

For the reporting, a cosine similarity based value or any other type of normalized values might be used. This option is beneficial as based on the first fresh CQI value and the normalized values the gNB can directly infer the best modulation and coding scheme (MCS). Generally, the codebook size may be predefined or determined by gNB and configured in the UE by RRC or MAC CE / DCI messages.

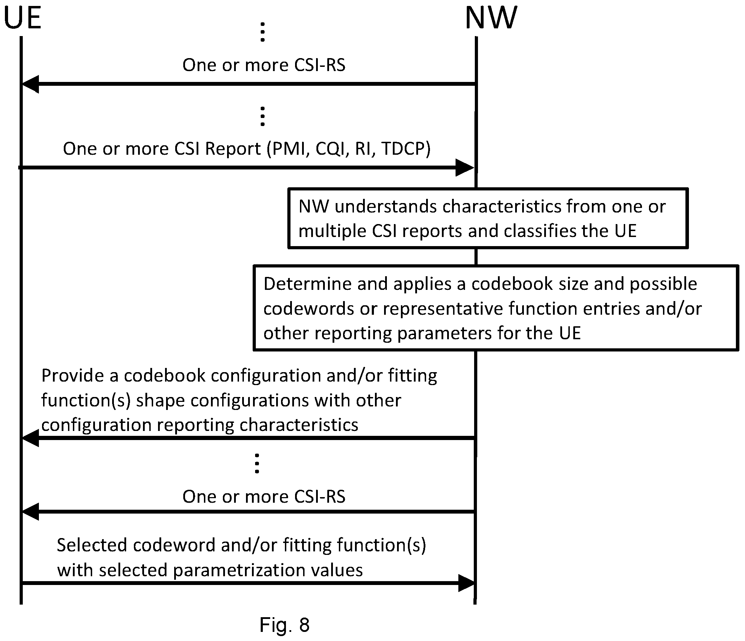

gNB may adapt the CQI codebook to the overall channel conditions of a certain UE, as shown in Fig. 8. For example, gNB may adapt the codebook dependent on the location of the UE (e.g. urban/rural/etc.). In that way, the codebook size can be optimized to the trends typically occurring in the respective environment. For adapting the codebook characteristics, the gNodeB might collect the behaviour of one or more UEs in the cell by identifying the historic behavior obtained from the channel conditions obtained from the CSI including PMI, CQI, RI, TDCP as reported in an initial training phase. Based on such reported quantities, different types of UEs can be defined. For instance, NLOS and LOS UEs can be determined from spatial beam information from PMI; Fast or slow UEs can be determined from TDCP statistics. Then for each classified group of UEs, CQI or rank behaviors can be obtained from historical patterns obtained from multiple measurements. These observed channel conditions and related patterns can help the BS to create the most probable entries to the codebook based on likely observed trends from the historic measurements and assign a respective codebook to a specific group of UEs accordingly. In addition to the codeword, the UE may provide to the base station some parametrization for the function represented by the codeword.

The actions in Fig. 8 are as follows:
The network (base station) transmits one or more CSI-RS, and in response, the UE provides one or more CSI reports. The CSI reports may comprise any CSI reporting quantity, such as PMI, CQI, RI, TDCP and/or also other statistics, for example, based on cosine similarity (e.g., CS, SCS, or SGCS) of current measurements or estimations with respect to previous measurements or estimations. Based on the CSI reports, the network understands the characteristics of the UE and determines a codebook which is suitable for the UE. The network may determine different codebooks for different CSI reporting quantities. The NW configures the codebook(s) in the UE. Based on further CSI-RS measurements, the UE determines a trend for one or more CSI reporting quantities. The UE determines the codebook entry best fitting the trend, and reports the respective codeword to the network (in addition to a fresh value of the CSI reporting quantity).

In some example embodiments, the UE might select from a set of preconfigured CQI codebooks the currently best fitting one.

Reporting of the CQI codebook is useful as the gNB can adapt the MCS to be used for a transmission to the UE to the prediction time instances. One specific embodiment for the usage of the CQI codebook is then to use, a predictor (e.g. the simplest ZOH predictor) plus the report of the CQI codebook. Based on this information the gNB can define the time instances with highest performance and schedule the UE to these best PRBs and time slots. In that way, at least for some PRBs there is no need for a complex channel predictor. In contrast, for the PRBs, which experience a fast degradation over time these might then be reported by using an adequate channel prediction method.

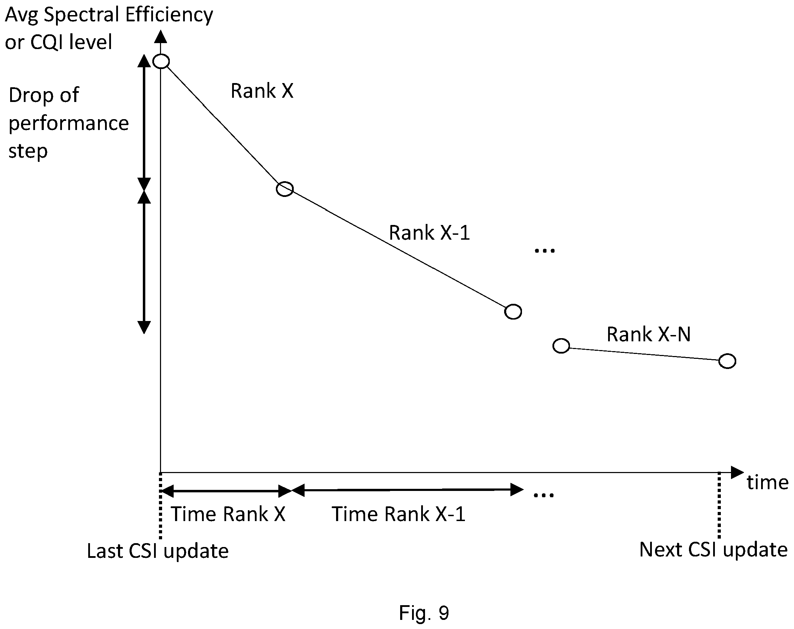

For the rank indicator (RI), in some example embodiments, a similar approach with a codebook (RI codebook) might be used. The codeword might, for example, simply report one or more degradation slopes assuming the simplest case with a linear approximation, as shown in Fig. 9. In addition, the initial rank will be reported. Also time indications of the time of reliability of a given rank indication can be provided as depicted in Fig. 9. The steps for switching the rank indicator could be based on a specific percentage of performance loss or the point in which a given layer stream does not give further spectral efficiency contribution over a threshold (e.g. contribution of a given layer is below a given percentage of the total spectral efficiency).

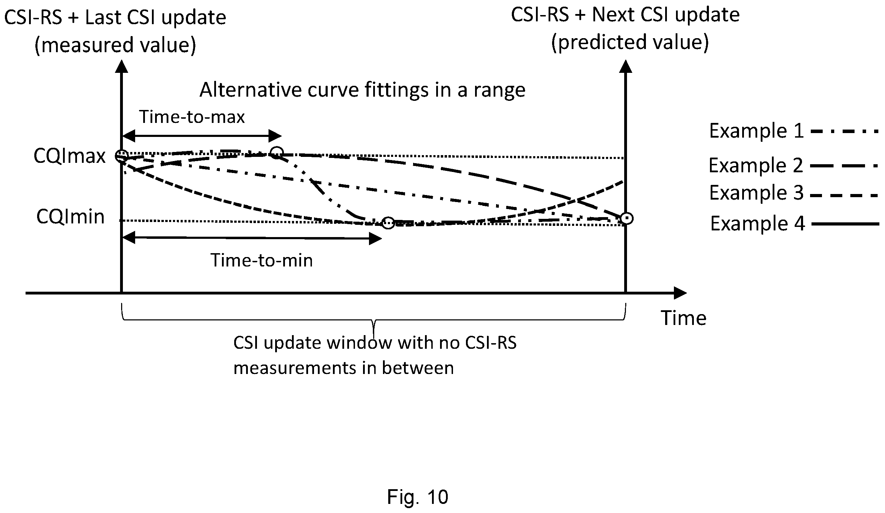

If the CSI-RS measurements have a 1-to-1 relationship with the CSI reporting periodicity, one may estimate CQI using ZOH or any higher order complexity CSI prediction, for the next the CSI and compare it with the actual next received CSI-RS measurement. In that case, for example, the UE may report a maximum CQI value and minimum CQI value. In a simplest case, according to some example embodiments, the prediction of the CQI at intermediate times may be a line with a slope connecting the maximum CQI value with minimum CQI value. The maximum CQI value is typically the current (fresh) CQI value. Some example embodiments may provide more complicated predictions. For example, they may report the maximum CQI value and minimum CQI value in combination with the currently measured CQI value and a predicted value in the next CSI. In addition, an estimated time to place the minimum and maximum CQI values may be reported. A polynomial function which passes through each of these points may be taken as the prediction This is illustrated with several potentially usable functions in Fig. 10. In Fig. 10, for one of the functions (indicated by the dash-dotted line) the reported CQI values and estimated times are indicated.

Some example embodiments use additional information sources to obtain the trend in between two CSI updates in the case of a 1-to-1 relationship. For instance, the UE may use previous training with a denser CSI-RS scheme or implement interpolation with previous CSI-RS measurements but may keep same density or derive and/or combine the estimated trend for the next CSI period with other input information like other reference signals. Other reference signals that may be used to determine further the curve fitting parametrization characteristics of that segment to define the best fitting polynomial between the two CSI updates and the associated currently measured CQI and/or predicted CQI in the next CSI update as well as the estimated maximum and/or minimum CQI may be TRS or SRS. TRS may be considered as another type of CSI RS which is transmitted from gNB to UE, and the UE reports on the measurement of TRS to the gNB. SRS is transmitted by the UE to the gNB. Hence, gNB does not need any reporting of a SRS measurement but is aware of the measurement result.

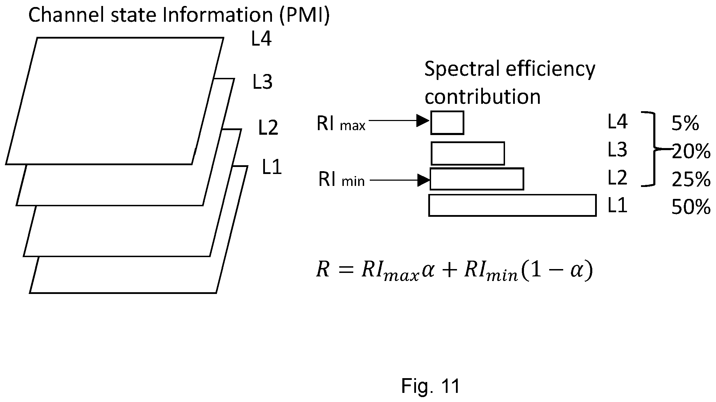

In some example embodiments, a similar mechanism may be applied for the case of a single segment (1-to-1 relationship of CSI measurements an CSI reporting) for the rank prediction (estimation), which may comprise maximum and minimum rank with a single degradation slope or a reliability coefficient.. The maximum rank value would be the rank value to be used in the first transmission slots (e.g. using the legacy rank indicator) and the minimum rank value should be used in slots located far away from the last CSI update. The minimum rank value reported may be defined based on a percentage of the maximum attainable spectral efficiency of the maximum rank value, e.g. 50-75% of the maximum spectral efficiency can be obtained by using the minimum rank value as depicted in Fig. 11. In the illustrated example, rank 2 is selected as minimum but the initial rank indicator, i.e. maximum rank, reports rank 4. The rank at an intermediate time between two RI reportings may be calculated by a linear formula, such as R = RIₘₐₓα +RIₘᵢₙ(1-α). α may be a normalized time between the two RI reporting times. However, in some example embodiments, α may depend on one or more of other reference signals (e.g. TRS and/or SRS). I.e., α may be a normalized metric obtained from these reference signals.

The network may select during initial configuration (or reconfigurations) the minimum percentage limits for the normalized spectral efficiency with respect to the maximum rank indicator in which the MIMO transmission is stable and acceptable. So, based on the determined minimum limits, the UE reports the minimum rank indicator. Alternatively, as the UE is capable of knowing the spectral efficiency contribution of each stream, the UE could report such percentages for each rank layer stream in a quantized manner and the network might select the maximum and minimum rank implicitly. Furthermore, the TDCP value or a normalized time value between CSI updates may be used by the network to adapt the applied transmission rank in between the maximum and minimum rank reported values by using a weighted average calculation by means of the maximum and minimum rank values. These values could be mapped into different tables or a formula, so the UE might also know the adapted transmission rank chosen at the network side beforehand.

The disclosed example embodiments are particularly useful whether the reported PMI is predicted or not. A non predicted PMI may come with a CQI/RI defined by the different reliability or correction values of the CQI/MCS and rank values. At the transmission time the network side may use the reported reliability information to select the best fitting CQI/MCS and rank values .

In the case of combining PMI reporting with prediction such reliability or correction values might be used to decide if the CSI prediction should be deactivated or reconfigured. Such a deactivation or reconfiguration makes sense, if the achieved reliability falls below a certain threshold value. The network may additionally request during configuration to calculate the CQI/RI behavioral trend reporting based on predicted or non-predicted CSI fully decoupled (or not) of the PMI reporting, which might be using prediction or not.

In some example embodiments, the CQI/RI trend reporting may be defined as a set of curves with estimated reliability or correction coefficients for one or more time segments described with respect to an initial or reference value of the reported CQI and/or RI (i.e. the fresh value of CQI and/or Rl). The number of time segments may depend on the density of the CSI-RS measurements with respect to the reporting CSI window or the window defined for long term CQI/RI pattern estimation. Furthermore, curve parametrization can be included to soften the selected codeword entries for the one or more segments associated to the codeword.

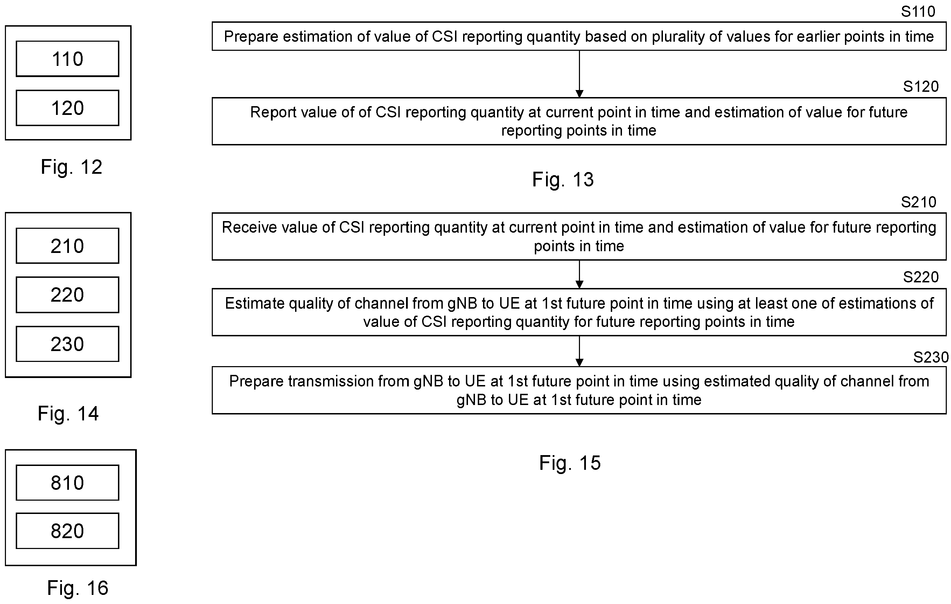

Fig. 12 shows an apparatus according to an example embodiment. The apparatus may be a terminal (such as a UE) or an element thereof. Fig. 13 shows a method according to an example embodiment. The apparatus according to Fig. 12 may perform the method of Fig. 13 but is not limited to this method. The method of Fig. 13 may be performed by the apparatus of Fig. 12 but is not limited to being performed by this apparatus.

The apparatus comprises means for preparing 110 and means for reporting 120. The means for preparing 110 and means for reporting 120 may be a preparing means and reporting means, respectively. The means for preparing 110 and means for reporting 120 may be a preparer and reporter, respectively. The means for preparing 110 and means for reporting 120 may be a preparing processor and reporting processor, respectively.

The means for preparing 110 prepares, in a terminal, for each of one or more future reporting points in time a respective estimation of a value of a CSI reporting quantity (S110). The estimation is based on a plurality of values of the CSI reporting quantity for earlier points in time. The plurality of values of the CSI reporting quantity for the earlier points of time and the value of the CSI reporting quantity at the current point of time are determined based on measurements of a reference signal received by the terminal from the base station.

The means for reporting 120 reports, to a base station, a value of the CSI reporting quantity at a current point in time and, for each of the one or more future reporting points in time, the respective estimation of the value of the CSI reporting quantity (S120).

Fig. 14 shows an apparatus according to an example embodiment. The apparatus may be a base station (such as a gNB or eNB) or an element thereof. Fig. 15 shows a method according to an example embodiment. The apparatus according to Fig. 14 may perform the method of Fig. 15 but is not limited to this method. The method of Fig. 15 may be performed by the apparatus of Fig. 14 but is not limited to being performed by this apparatus.

The apparatus comprises means for receiving 210, means for estimating 220, and means for preparing 230. The means for receiving 210, means for estimating 220, and means for preparing 230 may be a receiving means, estimating means, and preparing means, respectively. The means for receiving 210, means for estimating 220 and means for preparing 230 may be a receiver, estimator, and preparer, respectively. The means for receiving 210, means for estimating 220 and means for preparing 230 may be a receiving processor, estimating processor, and preparing processor, respectively.

The means for receiving 210 receives, in a base station from a terminal, a value of a CSI reporting quantity at a current point in time and, for each of one or more future reporting points in time, a respective estimation of a value of the CSI reporting quantity (S210). The value of the CSI reporting quantity at the current point in time is based on a reference signal latest transmitted by the base station to the terminal.

The means for estimating 220 estimates a quality of a channel from the base station to the terminal at a first future point in time using the value of the CSI reporting quantity at the current point in time and at least one of the estimations of the value of the CSI reporting quantity for the future reporting points in time (S220).

The means for preparing 230 prepares a transmission from the base station to the terminal at the first future point in time using the estimated quality of the channel from the base station to the terminal at the first future point in time (S230).

Fig. 16 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 13 or Fig. 15.

Some example embodiments are described for predicting (estimating) CQI and/or Rl. However, similar mechanisms may be applied for each of the CSI reporting quantities. In some example embodiments, only one of the CSI reporting quantities is estimated. In some example embodiments, plural CSI reporting quantities are estimated.

Some example embodiments are explained with respect to 5G. However, other example embodiments may be employed in other 3GPP generations, such as 4G, 6G, 7G, etc..

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, a terminal (such as a UE) or an element thereof (which may or may not be actually integrated in the terminal), an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a base station (such as a gNB or eNB) or an element thereof (which may or may not be actually integrated in the base station), an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

## Claims

1. Apparatus comprising
means for preparing, by a terminal for each of one or more future reporting points in time, a respective estimation of a value of a channel state information reporting quantity based on a plurality of values of the channel state information reporting quantity for earlier points in time;
means for reporting, to a base station, a value of the channel state information reporting quantity at a current point in time and, for each of the one or more future reporting points in time, the respective estimation of the value of the channel state information reporting quantity, wherein
the plurality of values of the channel state information reporting quantity for the earlier points of time and the value of the channel state information reporting quantity at the current point of time are determined based on measurements of a reference signal received by the terminal from the base station.

2. The apparatus according to claim 1, further comprising
means for checking, for at least one of plural predefined functions, whether a trend of the value of the channel state information reporting quantity at the current point in time and the estimations of the value of the channel state information reporting quantity for the one or more future reporting points in time deviates from the respective one of the plural predefined functions by less than a predefined threshold; wherein
the means for reporting is configured to report the estimations by reporting a first one of the plural predefined functions in response to checking that the trend deviates from the first one of the plural predefined functions by less than the predefined threshold.

3. The apparatus according to any of claims 1 and 2, further comprising
means for determining for which function of plural predefined functions a trend of the value of the channel state information reporting quantity at the current point in time and the estimations of the value of the channel state information reporting quantity for the one or more future reporting points in time deviates least from the respective one of the plural predefined functions; wherein
the means for reporting is configured to report the estimations by reporting a first one of the plural predefined functions in response to determining that the trend deviates least from the first one of the plural predefined functions.

4. The apparatus according to any of claims 2 and 3, wherein the plural predefined functions are defined in a first codebook, and the means for reporting is configured to report the estimations by reporting a number of an entry in the first codebook corresponding to the first one of the plural predefined functions.

5. The apparatus according to claim 4, further comprising at least one of
means for receiving the first codebook from the base station; or
means for storing a plurality of codebooks including the first codebook and means for receiving an indication from the base station that the first codebook is to be used.

6. The apparatus according to claim 1, wherein
the means for preparing is configured to prepare the estimation for a single future reporting point in time;
the estimation indicates a range of values the channel state information reporting quantity may have between the current point in time and the single future reporting point in time.

7. The apparatus according to claim 6, wherein
the range has a maximum value and a minimum value;
the value of the channel state information reporting quantity at the current point in time is one of the maximum value of the range and the minimum value of the range; and
the means for reporting is configured to report the other one of the maximum value of the range and the minimum value of the range.

8. Apparatus, comprising
means for receiving, by a base station from a terminal, a value of a channel state information reporting quantity at a current point in time and, for each of one or more future reporting points in time, a respective estimation of a value of the channel state information reporting quantity;
means for estimating a quality of a channel from the base station to the terminal at a first future point in time using the value of the channel state information reporting quantity at the current point in time and at least one of the estimations of the value of the channel state information reporting quantity for the future reporting points in time;
means for preparing a transmission from the base station to the terminal at the first future point in time using the estimated quality of the channel from the base station to the terminal at the first future point in time, wherein
the value of the channel state information reporting quantity at the current point in time is based on a reference signal latest transmitted by the base station to the terminal.

9. The apparatus according to claim 8, wherein
the means for receiving is configured to receive an indication of a first function defining a trend of the value of the channel state information reporting quantity at the current point in time and the estimations of the value of the channel state information reporting quantity for the plural future reporting points in time; and the apparatus further comprises
means for calculating, for the first future point in time, the estimation of the value of the channel state information reporting quantity based on the first function.

10. The apparatus according to claim 9, further comprising
means for storing a first codebook comprising plural entries; wherein
each of the entries of the first codebook comprises a respective function;
one of the entries of the first codebook comprises the first function;
the means for receiving is configured to receive a number of the entry comprising the first function; and the apparatus further comprises
means for extracting the first function from the first codebook based on the received number of the entry.

11. The apparatus according to claim 10, wherein
the means for storing is configured to store plural codebooks including the first codebook; and the apparatus comprises
means for selecting the first codebook among the plural codebooks;
means for providing, to the terminal, an indication that the first codebook is to be used.

12. The apparatus according to claim 11, wherein
the means for selecting is configured to select the first codebook based on a statistics obtained from one or more terminals.

13. The apparatus according to claim 8, wherein
the means for receiving is configured to receive the estimation for a single future reporting point in time;
the estimation indicates a range of values the channel state information reporting quantity may have between the current point in time and the single future reporting point in time;
the range has a maximum value and a minimum value.

14. The apparatus according to claim 13, wherein
the value of the channel state information reporting quantity at the current point in time is one of the maximum value of the range and the minimum value of the range; and
the means for receiving is configured to receive the other one of the maximum value of the range and the minimum value of the range.

15. The apparatus according to any of claims 13 and 14, further comprising
means for receiving, by the base station, at least one of a measurement value related to a second reference signal or a third reference signal;
means for estimating the quality of the channel at a second future point in time between the current point in time and the single future reporting point in time using a second function and the at least one of the measurement value related to the second reference signal and/or the third reference signal; wherein
the second function spans the range of values of the channel state information reporting quantity between the current point in time and the single future reporting point in time;
a value of the second function at the current point in time is the value of the channel state information reporting quantity at the current point in time;
the second reference signal is transmitted by the base station and received by the terminal;
the third reference signal is transmitted by the terminal; and
the first reference signal is different from the second reference signal.

16. The apparatus according to claim 15, wherein the second function is a monotonic function.

17. The apparatus according to any of claims 8 to 16, wherein
the means for preparing is configured to estimate the quality of the channel from the base station to the terminal at the first future point in time using at least the estimation of the value of the channel state information reporting quantity for the future reporting point in time immediately following the first point in time and,
if at least one of the future reporting points in time precedes the first future point in time: the estimation of the value of the channel state information reporting quantity for the future reporting point in time immediately preceding the first future point in time;.
if none of the future reporting points in time precedes the first future point in time: the value of the channel state information reporting quantity at the current point in time.

18. The apparatus according to any of claims 8 to 17, wherein
the means for preparing is configured to set at least one of a modulation and coding scheme and a rank for the transmission to the terminal at the first future point in time based on the estimated quality of the channel from the base station to the terminal at the first future point in time.

19. The apparatus according to any of claims 8 to 18, further comprising
means for deciding whether the estimated quality of the channel at a second future point in time is poorer than a threshold;
means for inhibiting the base station to perform the transmission to the terminal at the second future point in time in response to deciding that the estimated quality of the channel at the second future point in time is poorer than the threshold.

20. The apparatus according to any of all preceding claims, wherein the channel state information reporting quantity comprises at least one of a channel quality indicator of a channel from the base station to the terminal, a maximum rank for a transmission from the base station to the terminal, or an intermediate key performance indicator for the channel comparing a measurement or estimation of the channel with a reference channel measurement or estimation, such as a squared generalized cosine similarity or a sharpened cosine similarity or a cosine similarity.
